# EUROPÄISCHE PATENTSCHRIFT

(11) **EP 4 480 053 B1**
(45) Veröffentlichungstag und Bekanntmachung des Hinweises auf die Patenterteilung: **17.06.2026**
(21) Anmeldenummer: 23707264.0
(22) Anmeldetag: 14.02.2023
(51) Int. Cl.: H02G 9/04, H02G 11/00, B66C 13/12, F16G 13/16

(54) **VORRICHTUNG ZUR VERBINDUNG EINES SCHIFFES MIT EINEM LANDSEITIGEN VERSORGUNGSNETZ**
DEVICE FOR CONNECTING A SHIP TO A LAND-SIDE SUPPLY GRID
DISPOSITIF DE CONNEXION D'UN NAVIRE À UN RÉSEAU D'ALIMENTATION CÔTÉ TERRE

(30) Priorität: 14.02.2022 DE 102022103342
(43) Veröffentlichungstag der Anmeldung: 25.12.2024
(73) Patentinhaber: Stemmann-Technik GmbH, 48465 Schüttorf (DE)
(72) Erfinder: MÖLLER, Christoph, 48488 Emsbüren (DE); TEUPEN, Pascal, 48431 Rheine (DE)
(74) Vertreter: Griepenstroh, Jörg
(86) Internationale Anmeldenummer: PCT/DE2023/100123
(87) Internationale Veröffentlichungsnummer: WO 2023/151761

(56) Entgegenhaltungen:
- EP-A1- 0 705 665
- WO-A1-2012/116919
- CN-A- 112 838 552
- DE-U1- 202017 106 108

## Beschreibung

Die Erfindung betrifft eine Vorrichtung zur Verbindung eines Schiffes mit einem landseitigen Versorgungsnetz gemäß den Merkmalen im Oberbegriff des Patentanspruchs 1.

Die DE 10 2018 003 806 B4 offenbart eine Vorrichtung zur Erstellung eines elektrischen Anschlusses mittels einer landseitig verfahrbaren Kupplungseinheit, die eine im Querschnitt halbkreisförmige Führungsbahn für einen schiffseitigen Stecker aufweist. Die schienengebundene verfahrbare Kupplungseinheit ist über eine Leitungskette mit einem landseitigen Versorgungsnetzanschluss verbunden.

Bei Containerschiffen besteht das Risiko, dass Befestigungselemente für Container auf den Kai herunterfallen und dort zu Beschädigungen führen. Besonders sensibel ist hierbei eine offenliegende Energieführungskette. Eine Energieführungskette ist ein Bauteil, das flexible Leitungen führt und schützt. Die Führung dient dazu, einen kleinsten zulässigen Biegeradius der zu schützenden Leitungen einzuhalten. Standardisierte Einzelelemente ermöglichen nach dem Baukastenprinzip den Aufbau einer solchen Energieführungskette. Energieführungsketten besitzen daher bei der Richtungsumkehr der Leitung Umlenkungen, die nach oben ragen. Wenn es im Bereich der Umlenkung zu einem Anprall von oben kommt, wird der Mindestbiegeradius der zu schützenden Leitungen unterschritten und die Leitungen in der Energiekette werden zerstört. Auch kann eine Umlenkung einer Energieführungskette unvermeidbar so ungünstig vor einem Poller positioniert sein, dass die Umlenkung mit Festmacherleinen kollidieren würde oder auch für eine Gangway, die vom Schiffsrumpf herabgelassen wird, hinderlich ist.

Die WO 2012/116919 A1 offenbart eine Vorrichtung zur Verbindung eines Schiffes mit einem landseitigen Versorgungsnetz. Eine landseitige Kupplungseinheit dient zur Aufnahme eines kabelgebundenen schiffsseitigen Steckers. Die Kupplungseinheit besitzt einen Schlitten, der schienengeführt horizontal verfahrbar ist. An dem Schlitten ist ein steckerseitiger Abschnitt einer Energieversorgungsleitung vertikal verschiebbar angeordnet. Die Kupplungseinheit besitzt eine Energieführungskette, die kabelgebunden mit dem landseitigen Versorgungsnetz verbunden ist. Die Energieführungskette ist versenkt angeordnet und mit einer sogenannten Panzerbelt-Abdeckung abgedeckt, so dass die Energieversorgungskette zum Beispiel von Kränen oder ähnlichen Fahrzeugen überfahren werden kann. Aufgrund der Orientierung der Energieversorgungskette muss der versenkte Schacht, in dem die Energieversorgungskette geführt wird, relativ tief ausgeführt sein.

Der Erfindung liegt die Aufgabe zugrunde, eine Vorrichtung zur Verbindung eines Schiffes mit einem landseitigen Versorgungsnetz aufzuzeigen, welche im Bereich eines Kais möglichst platzsparend angeordnet sein kann, gleichzeitig eine bessere Betriebssicherheit gegen herabfallende Objekte ermöglicht und kein Hindernis für andere wichtige Funktionskomponenten im Bereich des Kais oder beim Anlegen eines Schiffes darstellt.

Diese Aufgabe ist bei einer Vorrichtung zur Verbindung eines Schiffes mit einem landseitigen Versorgungsnetz gemäß den Merkmalen des Patentanspruchs 1 gelöst.

Die Unteransprüche betreffen zweckmäßige Weiterbildungen des Erfindungsgedankens.

Die erfindungsgemäße Vorrichtung zur Verbindung eines Schiffes mit einem landseitigen Versorgungsnetz umfasst eine landseitige Kupplungseinheit zur Aufnahme eines kabelgebundenen schiffseitigen Steckers. Die landseitige Kupplungseinheit ist schienengeführt verfahrbar. Die landseitige Kupplungseinheit ist über wenigstens eine Energieführungskette kabelgebunden mit dem landseitigen Versorgungsnetz verbunden. Erfindungsgemäß ist vorgesehen, dass die wenigstens eine Energieführungskette in einem Umlenkbereich eine Biegeachse in Hochrichtung aufweist und flach auf ihrer Seite liegend in einem Führungskanal angeordnet ist. Die Energieführungskette wälzt also nicht, wie bei stehenden Anordnungen auf dem Untergrund ab, sondern gleitet liegend über den Untergrund. Der Begriff Hochrichtung bezeichnet die Lotrichtung am Standort, d.h. die Senkrechte oder Vertikale zur Horizontalebene. Die "Biegeachse" ist die Achse, auf welcher der Krümmungsmittelpunkt des Krümmungskreises der Energieführungskette bzw. der Leitungen im Umlenkbereich liegt. Die Energiekette besteht aus mehreren schwenkbeweglich in Schwenkachsen miteinander verbundenen Kettengliedern. Die jeweiligen Schwenkachsen der Kettenglieder verlaufen parallel zueinander und parallel zur Biegeachse. Die Schwenkachsen erstrecken sich von einer oberen Stirnseite zu einer unteren Stirnseite der Kettenglieder. Die Begriffe "oben" und "unten" beziehen sich auf die Hochrichtung/Vertikale. Der vertikale Abstand der Stirnseiten bestimmt in der erfindungsgemäßen Einbaulage die in Hochrichtung gemessene Höhe der Energiekette. Die Ausdrücke "liegend", "flach auf der Seite liegend", "in liegender Anordnung" bedeuten "auf einer der beiden Stirnseiten liegend", so dass die Schwenkachsen nach oben und unten weisen, d.h. vertikal angeordnet sind und daher der Umlenkbereich mit der ebenfalls vertikalen Biegeachse nicht über die andere Stirnseite in Hochrichtung nach oben ragt. Der Begriff "Biegeachse" ist nicht mit dem Begriff "Biegelinie" zu verwechseln, welche den kurvenförmigen Verlauf der Energieführungskette oder der zu führenden Leitung beschreibt, d.h. insbesondere einen Krümmungskreis dessen Krümmungsmittelpunkt auf der Biegeachse liegt.

Die im Wesentlichen waagerechte bzw. insbesondere waagerechte flach auf einer der Stirnseiten liegende Anordnung der Energieführungskette in einem Führungskanal ermöglicht es, den Führungskanal sehr flach zu gestalten. Ferner ragt die Energieführungskette auch im Umlenkbereich nicht mehr aus dem Führungskanal heraus. Das hat den Vorteil, dass die gesamte Vorrichtung noch vor den Pollern fahrwasserseitig am Kai angeordnet sein kann. Die Kupplungseinheit wird stets zu dem erforderlichen Ort gefahren, an dem die kabelgebundenen schiffseitigen Stecker heruntergelassen werden. Es ist gibt bei der erfindungsgemäßen Vorrichtung keinen nach oben ragenden Biegebereich der Energieführungskette, der besonders leicht durch herabfallende Objekte zerstört werden könnte.

Ein anderer Vorteil ist es, dass der Umlenkbereich weder Festmacherleinen behindern kann noch eine etwaige heruntergelassene Gangway. Die flache Bauweise in liegender Anordnung innerhalb des Führungskanals beansprucht in der Höhe sehr wenig Bauraum und lässt sich ohne größere Eingriffe in den Bereich eines Kais integrieren. Der Führungskanal muss hierzu nicht einmal in der Oberfläche des Kais versenkt werden, sondern kann sich auf und/oder fahrwasserseitig neben dem Kai befinden. Es sind daher keine strukturellen Eingriffe in die Baustruktur des Kais erforderlich, abgesehen von Befestigungsmitteln für die erfindungsgemäße Vorrichtung.

Der Führungskanal ist zumindest teilweise, bevorzugt allerdings insgesamt über eine Abdeckung geschützt ist.Es handelt sich bei der Abdeckung um einzelne starre Elemente in Form von Abdeckplatten. In jedem Fall muss die Abdeckung so gestaltet sein, dass die Kupplungseinheit als Mitnehmeranschluss der Energieführungskette Zugriff zur Energieführungskette hat. Die Kupplungseinheit besitzt eine Hubvorrichtung zum Öffnen der Abdeckung. Die Abdeckung wird von der Kupplungseinheit geöffnet, wenn die Kupplungseinheit verfahren wird. Die Abdeckung wird nach dem Überfahren wieder geschlossen. Das erfolgt selbsttätig durch Rückstellkräfte der Abdeckung. Bei seitlich angelenkten Abdeckplatten genügt die Schwerkraft als Rückstellkraft. Die energieführenden Leitungen werden über die Abdeckung sehr gut vor mechanischen Einflüssen und auch vor Witterungseinflüssen geschützt. Herunterfallende Teile können daher weder die Leitungen noch die Funktion der Energieführungskette beeinträchtigen. Schnee und Eis verbleiben auf der Abdeckung.

Bei den Abdeckplatten handelt es sich um gelenkig befestigte Abdeckplatten insbesondere aus Blech, insbesondere Stahlblech, die dazu eingerichtet und ausgebildet sind, von der Hubvorrichtung positionsabhängig geöffnet zu werden. Durch ihr Eigengewicht ist keine separate Schließvorrichtung bzw. Absenkvorrichtung für die Abdeckplatten erforderlich. Die Abdeckplatten müssen auch nur so weit angehoben werden, dass der Mitnehmeranschluss und die Anschlussleitungen an der Kupplungseinheit durch einen Spalt unterhalb der Abdeckplatten geführt werden kann, so dass die Energieführungskette entsprechend der Fahrrichtung der Kupplungseinheit bewegt wird. Die Abdeckplatten können eine strukturierte Oberfläche aufweisen, um die Rutschsicherheit und damit die Arbeitssicherheit zu erhöhen.

In einer besonders bevorzugten Ausführungsform der Erfindung ist der Führungskanal dazu eingerichtet und ausgebildet, fahrwasserseitig an einem Kai angeordnet zu werden. Das Fahrwasser grenzt an eine Kaiwand des Kais. Der Führungskanal kann daher im Bereich der Kaiwand angeordnet sein. Er kann dies Kaiwand zum Fahrwasser hin überragen oder komplett oberhalb des Fahrwassers an der Kaiwand befestigt sein. Hierzu kann an der Kaiwand eine zum Fahrwasser weisende Tragstruktur montiert werden, die eine horizontale Oberseite bildet, welche über die Kaioberfläche hinausragt. Die horizontale Oberseite der Tragstruktur befindet sich bevorzugt im Wesentlichen in derselben Höhe wie die Oberfläche des Kais, in jedem Fall aber über dem üblichen Wasserspiegel des Fahrwassers. Auf dieser Tragstruktur kann wiederum der Führungskanal angeordnet werden. Der Führungskanal befindet sich bei dieser Ausführungsform gewissermaßen fahrwasserseitig vor dem Kai und nicht auf dem Kai. Die Vorrichtung wird fest mit der baulichen Struktur des Kais verbunden.

Die Kupplungseinheit ist bevorzugt oberhalb des Führungskanals angeordnet. Die erfindungsgemäße Vorrichtung erfordert daher oberhalb des Kai bzw. oberhalb der Kaiwand keinen Bauraum, sondern nur entlang des Kais und vor dem Kai. Die Vorrichtung kann an bestehenden Strukturen vergleichsweise einfach nachgerüstet werden. Zudem ist die Vorrichtung hinsichtlich der Länge des Fahrweges sehr leicht skalierbar.

Die Kupplungseinheit verfährt sehr nahe entlang des Rumpfes des mit Energie zu versorgenden Schiffes. Über Distanzelemente an der Kaiwand und durch den Einsatz von ohnehin am Kai vorhandenen Fendern ist die erfindungsgemäße Vorrichtung vor Beschädigungen, insbesondere durch anlegende oder ablegende Schiffe, geschützt.

Die erfindungsgemäße Vorrichtung weist keinen Umlenkbereich der Energieführungskette auf, der mit Festmacherleinen kollidieren könnte, die an Pollern an der Kaimauer fixiert werden müssen. Wie oben beschrieben, stört die erfindungsgemäße Vorrichtung auch nicht die Positionierung des Schiffes in Bezug auf die Gangway, weil der Umlenkbereich der Energievorrichtungskette flach in dem Führungskanal angeordnet ist. Die bezüglich des Kais exponierte Lage der Vorrichtung, sofern diese vor der Kaimauern befestigt ist, ist im Hinblick auf die Energieführungskette und im Hinblick auf die sichere Energiezuführung unkritisch, weil die robusten Abdeckplatten die Energieführungskette sicher schützen.

Die schienengeführte Kupplungseinheit ist derart mit der wenigstens einen Schiene verbunden, dass sie nicht nur von oben aufliegt, sondern auch gegen Anheben gesichert ist. Die Kupplungseinheit untergreift die Schiene zumindest teilweise. Die Kupplungseinheit kann bei normalem Gebrauch nicht entgleisen, auch nicht unter widrigen Witterungseinflüssen wie bei Wind oder bei Sturmfluten. Darüber hinaus kann der Führungskanal aufgrund seiner Anordnung vor der Kaimauer sehr leicht entwässert werden, was ebenfalls zur Betriebssicherheit der erfindungsgemäßen Vorrichtung beiträgt.

Zu erwähnen ist auch, dass die Abdeckung des Führungskanals aus arbeitssicherheitstechnischer Sicht keine Stolperfallen im Bereich der Kaimauer darstellt. Die Abdeckung ist belastbar, tragfähig und dafür ausgelegt, die verfahrbare Kupplungseinheit zu tragen.

Die Kupplungseinheit selber kann eine weitere Schutzfunktion im Hinblick auf den Führungskanal erfüllen. Sie kann eine Abschirmung aufweisen bzw. eine selbst eine Abschirmung darstellen um einen von der Hubvorrichtung geöffneten Bereich des Führungskanals gegen herabfallende Objekte zu schützen. Die Verbindung zwischen der Kupplungseinheit und der Energieführungskette, der sogenannte Mitnehmeranschluss befindet sich vorzugsweise unterhalb der Kupplungseinheit, so dass der Führungskanal auch nur unterhalb der Kupplungseinheit von der Hubvorrichtung geöffnet werden muss. Da sich die Kupplungseinheit selbst oberhalb des geöffneten Bereichs des Führungskanals befindet, wird auch der geöffnete Bereich des Führungskanals gegen herabfallende Objekte geschützt. Dabei weist der geöffnete Bereich vorzugsweise vom Fahrwasser weg und zeigt zur Landseite. Die Abdeckplatten sind zu diesem Zweck vorzugsweise fahrwasserseitig über wenigstens ein Gelenk befestigt. Jede der Abdeckplatten besitzt mithin ein über ein Gelenk angeschlossenes Ende und ein freies, verschwenkbares Ende. Das freie Ende weist zur Landseite und ist mittels der Hubvorrichtung anhebbar.

Die Anordnung des Gelenks zur Fahrwasserseite hin ermöglicht es, etwaige Inspektionen oder Reparaturen im Bereich des Führungskanals leichter vorzunehmen. Die aufgeklappten Abdeckplatten schützen zugleich das Montagepersonal zur Fahrwasserseite hin und dienen gewissermaßen als Absturzsicherung. Sollte eine einzige Abdeckplatte beschädigt sein, kann diese leicht ausgetauscht werden.

Der Führungskanal kann gleichzeitig wenigstens eine Schiene für die Kupplungseinheit aufweisen. Der Führungskanal ist in diesem Zusammenhang das zentrale tragende Element der erfindungsgemäßen Vorrichtung. Vorzugsweise weist der Führungskanal zwei parallel angeordnete Schienen für die Kupplungseinheit auf. Die Spurweite des Fahrwerks der landseitigen Kupplungseinheit entspricht vorzugsweise im Wesentlichen der äußeren Breite des Führungskanals. Die Schienen können die Seitenwände des Führungskanals bilden. Im Querschnitt U-förmige Profile der Schienen mit in entgegensetzte Richtungen und vom Führungskanal wegweisenden Schenkeln und einem die Schenkel verbindenden Steg ermöglichen eine besonders kompakte Bauweise. Der vertikale Steg begrenzt den Führungskanal. Die beiden unteren Schenkel bilden die Laufflächen für die Kupplungseinheit. Die oberen Schenkel dienen als Auflager für die Abdeckplatten. Die Schienen haben daher eine doppelte Funktion als Komponenten des Führungskanals und zur Führung der Kupplungseinheit.

Der Führungskanal nimmt insbesondere nicht nur eine, sondern zwei sich vom Einspeisepunkt in entgegengesetzte Richtungen erstreckende Energieführungsketten auf. Die Anzahl der erforderlichen Energieführungsketten ist abhängig von der zu übertragenden Leistung durch die elektrischen Leitungen. Leitungen mit größeren Querschnitten erfordern größere Biegeradien. Wenn die Biegeradien klein bleiben sollen, z.B. weil die maximal möglich Breite des Führungskanals vor der Kaiwand begrenzt ist, können mehrere auch in entgegengesetzte Richtungen erstreckende Energieführungsketten verwendet werden. Die Erfindung schließt nicht aus, zwei oder mehrere in die gleiche Richtung verlaufende Energieführungsketten vorzusehen, wobei eine innere Energieführungskette einen kleinen Biegeradius als eine größere Energieführungskette aufweist. Die Energieführungskette ist erfindungsgemäß nicht darauf beschränkt, ausschließlich elektrische Energie zu übertragen. Mittels der Energieführungskette können auch weitere Medien oder auch Informationen übertragen werden, beispielsweise über Fluidleitungen oder Signalleitungen.

Die erfindungsgemäße Energieführungskette in liegender Anordnung wälzt beim Verlagern nicht ab, sondern gleitet. Zur Reduzierung der Gleitreibung ist vorgesehen, dass zwischen der gleitenden Unterseite bzw. unterseitigen Stirnseite und dem Führungskanal Gleitelemente an der Energieführungskette und/oder an dem Führungskanal angeordnet sind. Die Gleitelemente können aus einem Kunststoff bestehen mit niedrigem Reibbeiwert.

Alternativ ist eine rollende Lagerung der Energieführungskette innerhalb des Führungskanals vorgesehen. Rollen oder Kugeln können zwischen der Unterseite bzw. unterseitigen Stirnseite der Energieführungskette und der Auflagefläche in der Führungsbahn angeordnet sein.

Die Erfindung wird nachfolgend anhand von in den Zeichnungen rein schematisch dargestellten Ausführungsbeispielen näher erläutert. Es zeigen:
- Figur 1: eine Schnittdarstellung durch die erfindungsgemäße Vorrichtung;
- Figur 2: die Vorrichtung der Figur 1 in einer Seitenansicht teilweise im Schnitt;
- Figur 3: die Vorrichtung der Figur 1 in der Draufsicht und teilweise im Schnitt;
- Figur 4: eine Prinzipdarstellung der gegenläufigen Energieführungskette der erfindungsgemäßen Vorrichtung und
- Figur 5: ein weiteres Ausführungsbeispiel der erfindungsgemäßen Vorrichtung in einer Querschnittsdarstellung.

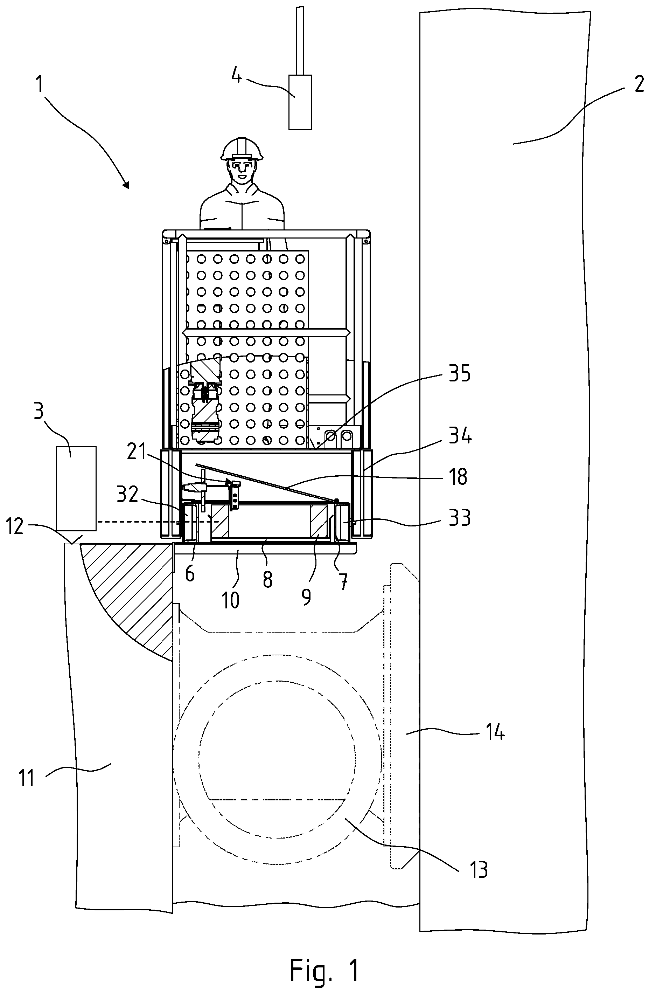

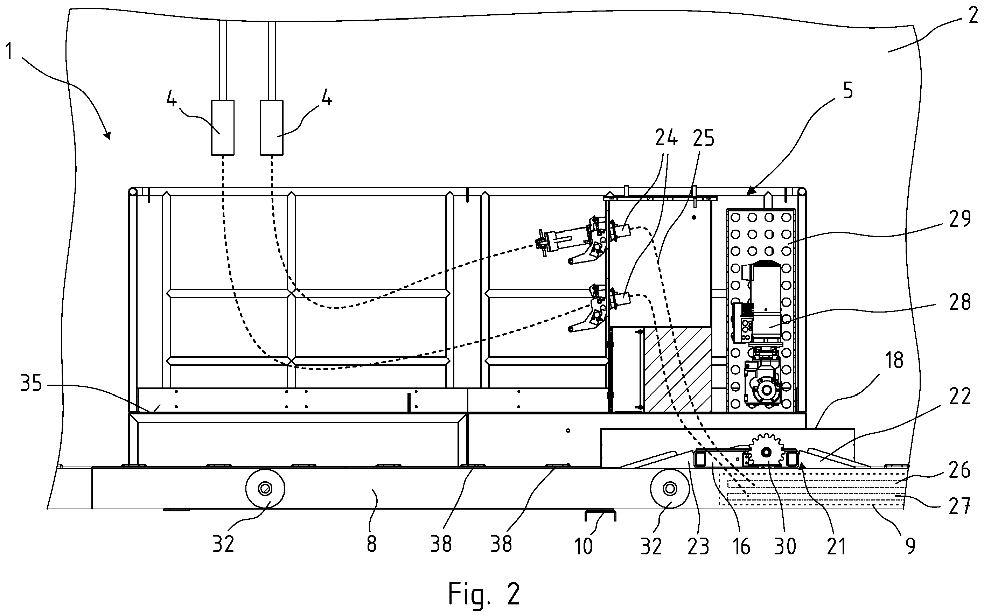

Die Figur 1 zeigt eine Vorrichtung 1 zur Verbindung eines nicht näher dargestellten elektrischen Netzes eines Schiffes 2 mit einem landseitigen Versorgungsnetz 3. Hierzu wird ein kabelgebundener schiffsseitiger Steckers 4 vom Schiff 2 herabgelassen wird und der Vorrichtung 1 von oben zugeführt. Die Vorrichtung 1 befindet sich senkrecht unterhalb des Steckers 4 und umfasst eine Kupplungseinheit 5, wie sie in Figur 2 dargestellt ist. Die Kupplungseinheit 5 ist schienengeführt verfahrbar. Die Vorrichtung 1 umfasst als ortsfeste Komponente Schienen 6, 7 mit einem Führungskanal 8 zur Aufnahme einer Energieführungskette 9. Die Schienen 6, 7, der Führungskanal 8 mit der Energieführungskette 9 und die gesamte Vorrichtung 1 auf den Schienen 6, 7 werden von horizontalen Trägern 10 getragen. Diese Träger 10 sind an einem Kai 11 fahrwasserseitig angeordnet. Die erfindungsgemäße Vorrichtung 1 befindet sich mithin teilweise fahrwasserseitig vor dem Kai 11, zum anderen aber auch über dem Bodenniveau 12 des Kais 11. Die Figur 1 zeigt in rein schematischer Darstellung Fender 13 und Distanzelemente 14, die unterhalb der Vorrichtung 1 und oberhalb des angedeuteten Wasserspiegels angeordnet sind. Die Vorrichtung 1 ist so dimensioniert, dass ein an- oder ablegendes Schiff 2 nicht mit den Komponenten der Vorrichtung 1 kollidieren kann. Die Vorrichtung 1 ist in bestehenden Industrie- oder auch Fährhäfen nachträglich installierbar.

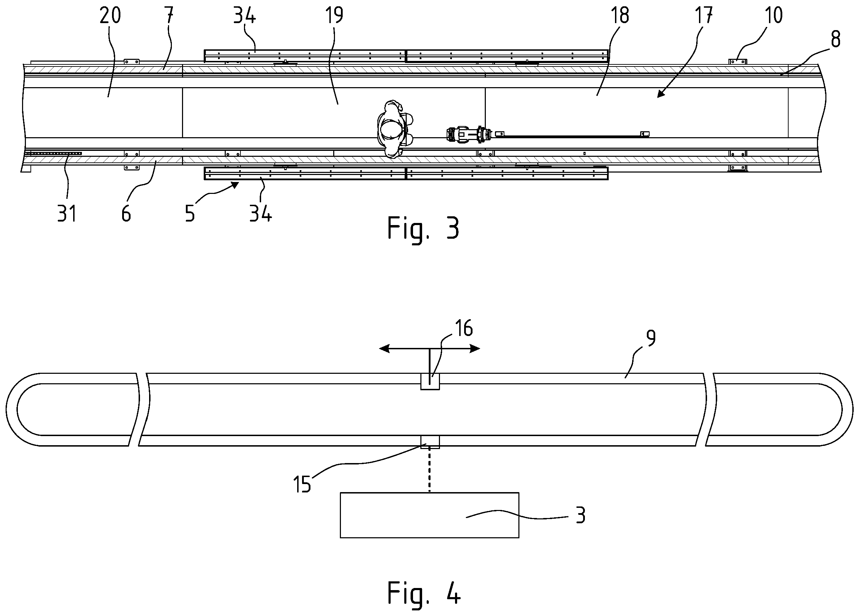

Ein besonderes Merkmal der Erfindung ist die Anordnung der Energieführungskette 9 innerhalb des Führungskanals 8. Die Energieführungskette 9 ist flach liegend auf der Seite angeordnet. Die Figur 4 zeigt in rein schematischer Darstellung eine Draufsicht auf die Energieführungskette 9. Die Energieführungskette 9 ist mit dem landseitigen Versorgungsnetz 3 über eine ortsfeste Einspeisestelle 15 verbunden. Der Doppelpfeil in der Figur 4 verdeutlicht, dass die Entnahmestelle 16 in beide Richtungen des Pfeils verlagerbar ist, beispielsweise um 50 bis 200 m je Richtung, so dass ein Bereich von 100 bis 400 m überbrückt werden kann. Das System ist skalierbar, indem die Länge der Energieführungskette 9 angepasst wird.

Die Energieführungskette 9 ist gegenläufig, d. h. es gibt jeweils einen linken und einen rechten Energieführungskettenstrang. Die endseitigen Umlenkbereiche bewegen sich gleichsinnig, wenn der Entnahmepunkt verlagert wird. Gegenläufig bedeutet in diesem Kontext, dass die Energieführungskettenstränge von entgegen gesetzten Seiten mit der Entnahmestelle 16 verbunden sind. Durch die gegensinnigen Energieführungsketten 9 ist es möglich, Leitungen mit kleineren Querschnitten und kleineren Biegeradien einzusetzen und dennoch entsprechend große Energiemengen über die zur Verfügung stehenden Querschnitte zu übertragen. Auf diese Weise kann der Führungskanal 8 eine geringere Breite aufweisen und damit so schmal sein, dass er vor dem Kai 11 montiert werden kann.

Es ist besonders von Vorteil, dass der Führungskanal 8 sehr flachbauend ist und die Energieführungskette 9 vollständig aufnehmen und stützen kann. Hierzu besitzt der Führungskanal 8 eine Abdeckung 17, die von mehreren einzelnen gelenkig befestigten Abdeckplatten 18, 19, 20 gebildet wird. Abdeckplatten 18, 19, 20 sind dazu eingerichtet und ausgebildet, von einer Hubvorrichtung 21 (Figur 2) angehoben zu werden, wenn die Kupplungseinheit 5 mit der Entnahmestelle 16 an der jeweiligen Abdeckplatte 18, 19, 20 vorbeigeführt wird. Die Figur 2 zeigt die Hubvorrichtung 21 mit endseitigen Rampenabschnitten 22, 23, die beim Verfahren der Kupplungseinheit 5 unter die jeweilige Abdeckplatte 18, 19, 20 fassen, um diese anzuheben, damit die Kupplungseinheit 5 über ihre Entnahmestelle 16 entlang des im Übrigen geschlossenen Führungskanals 8 verlagert werden kann. Die Figur 2 zeigt in schematischer Darstellung, wie zwei kabelgebundene schiffsseitige Stecker 4 herabgelassen werden können und manuell mit entsprechenden Steckkupplungen 24 an der Kupplungseinheit 5 verbunden werden können. Die gestrichelten Linien verdeutlichen, dass die Steckkupplungen 24 über Leitungen 25
mit energieführenden Leitungen 26, 27 der Energieführungskette 9 verbunden sind.

Aus der Seitenansicht der Figur 2 ist ferner eine elektromechanische Antriebseinheit 28 in einem Gehäuse 29 zu erkennen, die an der verfahrbaren Kupplungseinheit 5 angeordnet ist. Die Antriebseinheit 28 dient in nicht näher dargestellter Weise zum Antrieb eines Antriebsrades 30, das bei diesem Ausführungsbeispiel in Form eines Zahnrades gestaltet ist und mit einer Zahnstange 31 in Eingriff steht, die schematisch in Figur 3 dargestellt ist. Die Zahnstange 31 läuft parallel zu den Schienen 6, 7. Mittels der ansteuerbaren Antriebseinheit 28 wird die Kupplungseinheit 5 in die gewünschte Position verfahren.

Die Schienen 6, 7 sind U-förmig konfiguriert. In dem U-förmig umgriffenen Bereich der Schienen 6, 7 sind jeweils Laufräder 32, 33 angeordnet, die an einem Fahrwerk 34 befestigt sind. Das Fahrwerk 34 ist so bemessen, dass die geöffneten Abdeckplatten 18, 19, 20 sich im geöffneten Zustand unterhalb einer Arbeitsplattform 35 befinden, auf der ein Bediener die Stecker 4 in Empfang nehmen und zur jeweiligen Steckkupplung 24 führen kann. Die Arbeitsplattform 35 übergreift den geöffneten Bereich des Führungskanals 8 zumindest teilweise und bietet dadurch eine zusätzliche Abschirmung gegen herabfallende Objekte.

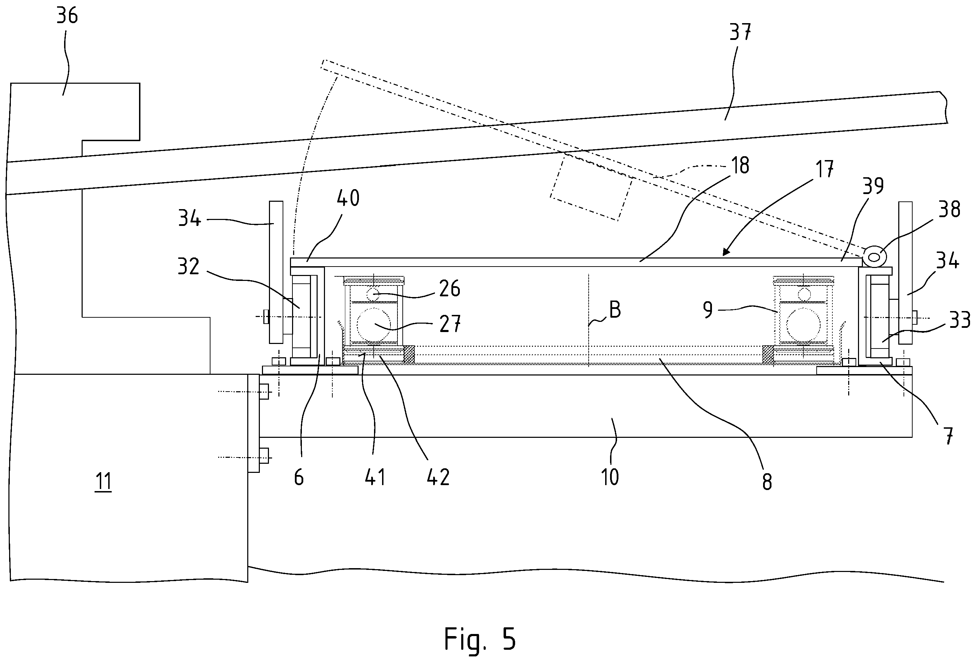

Das Fahrwerk 34 mit den Laufrädern 32, 33 ist noch einmal in stark vereinfachter Darstellung in der Figur 5 dargestellt. Die Figur 5 zeigt auf dem Kai 11 einen Poller 36 mit einer Festmacherleine 37. Die Abdeckung 17 mit der Abdeckplatte 18 ist im geschlossenen Zustand so niedrig, dass sie nicht mit der Festmacherleine 37 kollidiert. Die Bauhöhe des geschlossenen Führungskanals 8 ist auch deshalb so gering, weil die randseitig angeordneten Schienen 6, 7 den Führungskanal 8 seitlich begrenzen und gleichzeitig als Anschlag für die Abdeckplatte 18 bzw. die gesamte Abdeckung 17 dienen. Bei dem Ausführungsbeispiel der Figur 5 ist zu erkennen, dass die Abdeckung 17 bzw. die Abdeckplatte 18 zur Landseite hin öffnet. Fahrwasserseitig ist ein Gelenk 38 an der Oberseite der Schiene 7 befestigt. Jede der Abdeckplatten 18, 19, 20 kann über ein oder mehrere Gelenke 38 mit der Schiene 7 verbunden sein. Vorzugsweise sind je Abdeckplatte 18, 19, 20 zwei Gelenke 38 (Figur 2) vorgesehen.

Die Schnittdarstellung der Figur 5 verdeutlicht ferner im Querschnitt der Energieführungskette 9, dass zwei Leitungen 26, 27 in unterschiedlichen Höhenbereichen und mit unterschiedlichen Querschnitten innerhalb der Energieführungskette 9 angeordnet sein können. Die Figur 5 verdeutlicht damit exemplarisch, dass auch Leitungen für unterschiedliche Zwecke in ein und derselben Energieführungskette 9 geführt werden können, beispielsweise eine Leitung 27 mit größerem Querschnitt zur Energieübertragung in Kombination mit einer Leitung 26 geringeren Querschnitts zur Datenübertragung.

In der geschlossenen Position befinden sich über das Gelenk 38 angeschlossene Enden 39 und die freien, verschwenkbaren Enden 40 der Abdeckplatten 18 in einer flachen Horizontalebene. Die angehobene Position ist mit unterbrochener Linie dargestellt und ergibt sich nur dort, wo die Kupplungseinheit 5 es erfordert. Dort sind keine Festmacherleinen 37.

Die Abdeckplatten 18, 19, 20 bestehen vorzugsweise aus einem metallischen Werkstoff, der hinreichenden Schutz vor herabfallenden schweren Gegenständen bietet, wie beispielsweise Befestigungselementen von Containern, die von großer Höhe herabfallen können. Der Führungskanal 8 hat mithin eine erhebliche Schutzfunktion für die Energieführungskette 9 und die darin befindlichen Leitungen 26, 27. Sollten einzelne Bereiche, insbesondere Abdeckplatten 18, 19, 20 beschädigt werden, können diese leicht von der Landseite her ausgetauscht werden. Auch die Wartung der Energieführungskette 9 ist durch das Öffnen der Abdeckplatten 18, 19, 20 jederzeit einfach und zeitsparend möglich.

Um den Verschleiß der auf der Seite liegenden Energieführungskette 9 zu reduzieren, kann zwischen einer Unterseite 41 der Energieführungskette 9 und dem Führungskanal 8 ein geeignetes Gleitelement 42 mit geringem Reibbeiwert angeordnet sein, beispielsweise Gleitelemente aus einem Kunststoff. Es können auch die Reibung mindernde Schmierstoffe verwendet werden.

Der besondere Vorteil der erfindungsgemäßen Vorrichtung 1 besteht darin, dass auch im Umlenkbereich der Energieführungskette 9 der Führungskanal 8 vollständig geschlossen bleiben kann. Außer im Bereich der ohnehin erforderlichen Kupplungseinheit 5 gibt es keine Bereiche, die vertikal über die Höhe des Führungskanals 8 hochstehen. Unabhängig von der Position der Kupplungseinheit 5, die sich niemals im Bereich einer Gangway befindet, weil die Stecker 4 stets mit Abstand zur Gangway heruntergelassen werden, kann es keine Bereiche geben, welche das Festmachen oder Abfertigen des Schiffes beim Be- und Entladen behindern könnten. Es werden keine Festmacherleinen 37 behindert, weil die erfindungsgemäße Vorrichtung 1, d.h. der Führungskanal 8 nicht nach oben über die Poller 36 zum Festmachen hinausragt. Die erfindungsgemäße Vorrichtung 1 sorgt für zusätzliche Arbeitssicherheit, weil der Zwischenraum zwischen der wasserseitigen Wand des Kais 11 und dem Rumpf des Schiffes 2 überbrückt wird.

Die Figur 5 zeigt ferner eine in Hochrichtung, d. h. in Vertikalrichtung, weisende Biegeachse B, um welche die im Führungskanal 8 angeordnete auf ihrer Seite liegende Energieführungskette 9 im Umlenkbereich verschwenkbar ist. Die Unterseite 41 der Energieführungskette 9 wird von Stirnseiten der einzelnen Kettengliedern der Energieführungskette 9 gebildet. Die einzelnen Kettenglieder sind über die Stirnseiten schwenkbeweglich miteinander verbunden sind. Die jeweiligen Schwenkachsen der Kettenglieder im Verbindungsbereich der Stirnseiten verlaufen parallel zur Biegeachse B, d.h. in der Darstellung der Figur 5 ebenfalls in Vertikalrichtung.

### Bezugszeichen:

- 1 -: Vorrichtung zur Energieübertragung
- 2 -: Schiff
- 3 -: Versorgungsnetz
- 4 -: schiffsseitiger Stecker
- 5 -: landseitige Kupplungseinheit
- 6 -: Schiene
- 7 -: Schiene
- 8 -: Führungskanal
- 9 -: Energieführungskette
- 10 -: horizontaler Träger
- 11 -: Kai
- 12 -: Bodenniveau des Kais
- 13 -: Fender
- 14 -: Distanzelement an 11
- 15 -: Einspeisestelle v. 9
- 16 -: Entnahmestelle v. 9
- 17 -: Abdeckung
- 18 -: Abdeckplatte
- 19 -: Abdeckplatte
- 20 -: Abdeckplatte
- 21 -: Hubvorrichtung
- 22 -: Rampenabschnitt v. 21
- 23 -: Rampenabschnitt v. 21
- 24 -: Steckkupplung v. 5
- 25 -: Leitung
- 26 -: Leitung in 9
- 27 -: Leitung in 9
- 28 -: Antriebseinheit
- 29 -: Gehäuse für 28
- 30 -: Antriebsrad
- 31 -: Zahnstange
- 32 -: Laufrad
- 33 -: Laufrad
- 34 -: Fahrwerk v. 5
- 35 -: Arbeitsplattform
- 36 -: Poller
- 37 -: Festmacherleine
- 38 -: Gelenk an 18, 19, 20
- 39 -: Ende v. 18
- 40 -: freies Ende v. 18
- 41 -: Unterseite v. 9
- 42 -: Gleitelement zwischen 8 und 9

- B -: Biegeachse

## Patentansprüche

1. Vorrichtung (1) zur Verbindung eines Schiffes (2) mit einem landseitigen Versorgungsnetz (3), wobei eine landseitige Kupplungseinheit (5) zur Aufnahme eines kabelgebundenen schiffseitigen Steckers (4) schienengeführt verfahrbar ist, wobei die Kupplungseinheit (5) wenigstens eine Energieführungskette (9) aufweist und dazu ausgebildet ist, über die wenigstens eine Energieführungskette (9) kabelgebunden mit dem landseitigen Versorgungsnetz (3) verbunden zu werden, **dadurch gekennzeichnet, dass** die wenigstens eine Energieführungskette (9) eine Biegeachse (B) in Hochrichtung aufweist, wobei die Energieführungskette (9) um die vertikale Biegeachse (B) verschwenkbar ist und flach auf der Seite liegend in einem Führungskanal (8) angeordnet ist, wobei der Führungskanal (8) eine Abdeckung (17) aufweist, wobei die Kupplungseinheit (5) eine Hubvorrichtung (21) zum Öffnen der Abdeckung (17) aufweist, wobei die Abdeckung (17) von einer Vielzahl von aufeinander folgenden, gelenkig befestigten Abdeckplatten (18, 19, 20) gebildet ist, die dazu eingerichtet und ausgebildet sind, von der Hubvorrichtung (21) positionsabhängig geöffnet zu werden, wobei die Kupplungseinheit (5) eine Abschirmung aufweist, um einen von der Hubvorrichtung (21) geöffneten Bereich des Führungskanals (8) gegen herabfallende Objekte zu schützen.

2. Vorrichtung (1) nach Anspruch 1, **dadurch gekennzeichnet, dass** der Führungskanal (8) dazu eingerichtet und ausgebildet ist, fahrwasserseitig an einem Kai (11) angeordnet zu werden, wobei die Kupplungseinheit (5) oberhalb des Führungskanals (8) angeordnet ist.

3. Vorrichtung (1) nach Anspruch 1 oder 2, **dadurch gekennzeichnet, dass** die Abdeckplatten (18, 19, 20) jeweils ein über ein Gelenk (38) angeschlossenes Ende (39) und ein freies, verschwenkbares Ende (40) aufweisen, wobei die freien Enden (40) zur Landseite weisen und mittels der Hubvorrichtung (21) anhebbar sind, wobei die über die Gelenke (38) angeschlossenes Enden (39) fahrwasserseitig angeordnet sind.

4. Vorrichtung (1) nach einem der Ansprüche 1 bis 3, **dadurch gekennzeichnet, dass** der Führungskanal (8) wenigstens eine Schiene (6, 7) für die Kupplungseinheit (5) aufweist.

5. Vorrichtung (1) nach Anspruch 4, **dadurch gekennzeichnet, dass** der Führungskanal (8) parallel angeordnete Schienen (6, 7) für die Kupplungseinheit (5) aufweist.

6. Vorrichtung (1) nach einem der Ansprüche 1 bis 5, **dadurch gekennzeichnet, dass** die Kupplungseinheit (5) mit zwei sich in entgegensetzte Richtungen erstreckenden Energieführungsketten (9) verbunden ist.

7. Vorrichtung (1) nach einem der Ansprüche 1 bis 6, **dadurch gekennzeichnet, dass** zwischen einer Unterseite (41) der wenigstens einen Energieführungskette (9) und dem Führungskanal (8) Gleitelemente (42) angeordnet sind.

8. Vorrichtung (1) nach einem der Ansprüche 1 bis 7, **dadurch gekennzeichnet, dass** die wenigstens eine Energieführungskette (9) in dem Führungskanal (8) über eine rollende Lagerung gelagert ist.

## Claims

1. A device (1) for connecting a ship (2) to a land-side supply grid (3), wherein a land-side coupling unit (5) for receiving a cable-connected ship-side plug (4) can be moved, guided by a rail, wherein the coupling unit (5) has at least one energy guide chain (9) and is configured to be connected to the land-side supply grid (3) via the at least one energy guide chain (9) by means of a cable, **characterized in that** the at least one energy guide chain (9) has a bending axis (B) in the vertical direction, wherein the energy guide chain (9) is pivotable about the vertical bending axis (B) and is disposed, lying flat on its side, in a guide channel (8), wherein the guide channel (8) has a cover (17), wherein the coupling unit (5) has a lifting device (21) for opening the cover (17), wherein the cover (17) is formed by a plurality of successive, articulated cover plates (18, 19, 20) which are arranged and configured to be opened by the lifting device (21) depending on its position, wherein the coupling unit (5) has a shielding to protect an area of the guide channel (8) opened by the lifting device (21) against falling objects.

2. The device (1) according to claim 1, **characterized in that** the guide channel (8) is arranged and configured to be disposed on the fairway side of a quay (11), wherein the coupling unit (5) is disposed above the guide channel (8).

3. The device (1) according to claim 1 or 2, **characterized in that** the cover plates (18, 19, 20) each have an end (39), connected via a joint (38), and a free, pivotable end (40), wherein the free ends (40) point towards the land side and can be raised by means of the lifting device (21), wherein the ends (39), connected via the joints (38), are disposed on the fairway side.

4. The device (1) according to any one of claims 1 to 3, **characterized in that** the guide channel (8) has at least one rail (6, 7) for the coupling unit (5).

5. The device (1) according to claim 4, **characterized in that** the guide channel (8) has parallel disposed rails (6, 7) for the coupling unit (5).

6. The device (1) according to any one of claims 1 to 5, **characterized in that** the coupling unit (5) is connected to two energy guide chains (9), extending in opposite directions.

7. The device (1) according to any one of claims 1 to 6, **characterized in that** sliding elements (42) are disposed between a lower side (41) of the at least one energy guide chain (9) and the guide channel (8).

8. The device (1) according to any one of claims 1 to 7, **characterized in that** the at least one energy guide chain (9) is mounted in the guide channel (8) via a rolling bearing.

## Revendications

1. Dispositif (1) de connexion d'un navire (2) à un réseau d'alimentation (3) côté terre, dans lequel une unité d'accouplement (5) côté terre pour recevoir une fiche (4) côté navire câblée est mobile sur rails, dans lequel l'unité d'accouplement (5) présente au moins une chaîne de transport d'énergie (9) et est conçue pour être connectée par câble au réseau d'alimentation (3) côté terre par l'intermédiaire de l'au moins une chaîne de transport d'énergie (9), **caractérisée en ce que** l'au moins une chaîne de transport d'énergie (9) présente un axe de flexion (B) dans le sens vertical, dans lequel la chaîne de transport d'énergie (9) est pivotante autour de l'axe de flexion (B) vertical et est disposée à plat sur le côté dans un canal de transport (8) horizontalement, dans lequel le canal de transport (8) présente un capot (17), dans lequel l'unité d'accouplement (5) présente un dispositif de levage (21) pour l'ouverture du capot (17), dans lequel le capot (17) est formé d'une pluralité de plaques de recouvrement (18, 19, 20) consécutives fixées articulées, qui sont configurées et formées pour être ouvertes par le dispositif de levage (21) en fonction de la position, dans lequel l'unité d'accouplement (5) présente un blindage pour protéger contre la chute d'objets une zone du canal de transport (8) ouverte par le dispositif de levage (21).

2. Dispositif (1) selon la revendication 1, **caractérisé en ce que** le canal de transport (8) est configuré et formé pour être disposé côté voie navigable sur un quai (11), dans lequel l'unité d'accouplement (5) est disposée au-dessus du canal de transport (8).

3. Dispositif (1) selon la revendication 1 ou la revendication 2, **caractérisé en ce que** les plaques de recouvrement (18, 19, 20) présentent respectivement une extrémité (39) reliée par une articulation (38) et une extrémité libre pivotante (40), dans lequel les extrémités libres (40) sont orientées vers le côté terre et peuvent être soulevées au moyen du dispositif de levage (21), dans lequel les extrémités (39) reliées par les articulations (38) sont disposées côté voie navigable.

4. Dispositif (1) selon l'une quelconque des revendications 1 à 3, **caractérisé en ce que** le canal de transport (8) présente au moins un rail (6, 7) pour l'unité d'accouplement (5).

5. Dispositif (1) selon la revendication 4, **caractérisé en ce que** le canal de transport (8) présente des rails (6, 7) disposés parallèlement pour l'unité d'accouplement (5).

6. Dispositif (1) selon l'une quelconque des revendications 1 à 5, **caractérisé en ce que** l'unité d'accouplement (5) est connectée à deux chaînes de transport d'énergie (9) s'étendant dans des directions opposées.

7. Dispositif (1) selon l'une quelconque des revendications 1 à 6, **caractérisé en ce que** des éléments coulissants (42) sont disposés entre une face inférieure (41) de l'au moins une chaîne de transport d'énergie (9) et le canal de transport (8).

8. Dispositif (1) selon l'une quelconque des revendications 1 à 7, **caractérisé en ce que** l'au moins une chaîne de transport d'énergie (9) est logée dans le canal de transport (8) par l'intermédiaire d'un palier roulant.
